# EUROPÄISCHE PATENTSCHRIFT

(11) **EP 1 348 085 B1**
(45) Veröffentlichungstag und Bekanntmachung des Hinweises auf die Patenterteilung: **10.08.2005**
(21) Anmeldenummer: 00989775.2
(22) Anmeldetag: 11.11.2000
(51) Int. Cl.: F16H 55/22

(54) **STIRNRAD FÜR EIN SCHNECKENGETRIEBE UND EINE FORM ZUR HERSTELLUNG EINES SOLCHEN STIRNRADS**
SPUR PINION FOR A WORM GEAR AND AN EMBODIMENT FOR PRODUCING SUCH A WORM GEAR
PIGNON DROIT POUR ENGRENAGE A VIS SANS FIN ET FORME D'EXECUTION POUR LA PRODUCTION D'UN TEL PIGNON DROIT

(30) Priorität: 29.11.1999 DE 19957440
(43) Veröffentlichungstag der Anmeldung: 01.10.2003
(73) Patentinhaber: ROBERT BOSCH GMBH, 70442 Stuttgart (DE); Werner Bauser GmbH, 78564 Wehingen (DE)
(72) Erfinder: HAUSSECKER, Walter, 77830 Buehlertal (DE); STRAUB, Rudolf, 77815 Buehl (DE); MOSKOB, Frank, 76131 Karlsruhe (DE); ERNST, Werner, 77833 Ottersweier (DE); AUER, Rudolf, 78586 Deilingen (DE); BAUSER, Michael, 78564 Wehingen (DE); MATTES, Hans, 78583 Böttingen (DE)
(86) Internationale Anmeldenummer: PCT/DE2000/004019
(87) Internationale Veröffentlichungsnummer: WO 2001/040679

(56) Entgegenhaltungen:
- DE-A- 3 414 842
- FR-A- 2 741 416
- GB-A- 871 020
- GB-A- 871 021
- US-A- 4 979 404
- PATENT ABSTRACTS OF JAPAN vol. 1997, no. 01, 31. Januar 1997 (1997-01-31) -& JP 08 226497 A (KYOIKU HAGURUMA KOGYO KK), 3. September 1996 (1996-09-03)
- PATENT ABSTRACTS OF JAPAN vol. 013, no. 420 (M-872), 19. September 1989 (1989-09-19) -& JP 01 159128 A (KOYO SEIKO CO LTD), 22. Juni 1989 (1989-06-22)
- PATENT ABSTRACTS OF JAPAN vol. 1998, no. 08, 30. Juni 1998 (1998-06-30) -& JP 10 071633 A (SAKAE KANAGATA KOGYO:KK), 17. März 1998 (1998-03-17)
- PATENT ABSTRACTS OF JAPAN vol. 2000, no. 08, 6. Oktober 2000 (2000-10-06) -& JP 2000 130564 A (SHOWA CORP;ENPLAS CORP), 12. Mai 2000 (2000-05-12)

## Beschreibung

Die vorliegende Erfindung betrifft ein Stirnrad für ein Schneckengetriebe gemäß dem Oberbegriff der Anspruchs 1, wie es aus Fig.3 der JP-A-1 159 128 bekannt geworden ist, und eine Form zur Herstellung eines einstückigen Stirnrads durch Spritzguß gemäß dem Oberbegriff der Anspruch 5, wie sie aus der JP-A-100 71633 bekannt geworden ist.

Als Stirnräder für Schneckengetriebe werden herkömmlicherweise Zahnräder mit Schrägverzahnung oder globoid- beziehungsweise halbgloboidförmige Zahnräder eingesetzt. Während bei einem einfachen Zahnrad mit Schrägverzahnung die Spitzen aller Zähne auf einer Zylinderfläche liegen, hat diese Fläche beim globoidförmigen Zahnrad im axialen Schnitt die Form eines konkaven Kreisbogens. Bei einem halbgloboidförmigen Zahnrad besteht der Querschnitt aus einem Kreisbogen, an den an seinem achsnächsten Punkt ein Geradenabschnitt tangential anschließt.

Globoid- oder halbgloboidförmige Zahnräder werden bei Anwendungen eingesetzt, bei denen es auf hohe Tragfähigkeit der Verzahnung ankommt, denn eine Globoidverzahnung kann eine Schnecke mit an den Kreisbogen des Globoids angepaßten Durchmesser praktisch auf der gesamten Breite der Verzahnung unterstützen, und nicht nur in einem mittleren Bereich, wie dies bei einer einfachen Schrägverzahnung der Fall ist. Die Herstellung von Globoidrädern ist jedoch ungleich aufwendiger als die von einfachen schrägverzahnten Rädern, denn um einen einzelnen Globoidzahn aus einem Zahnradrohling oder dem Rohling einer Form herauszuarbeiten, muß die Stellung des Werkzeugs mit fortschreitender Bearbeitung ständig nach einem komplizierten Schema angepaßt werden.

### Vorteile der Erfindung

Durch die vorliegende Erfindung wird zum einen ein Stirnrad für ein Schneckengetriebe geschaffen, das im Vergleich zu einem herkömmlichen Zahnrad mit Schrägverzahnung und zylindrischer Mantelfläche eine erheblich verbesserte Tragfähigkeit aufweist, dessen Herstellung aber deutlich einfacher und preiswerter ist als die eines Globoidrades.

Dies wird erreicht, indem bei einem einstückigen Stirnrad für ein Schneckengetriebe, das in herkömmlicher Weise eine erste Radscheibe mit Zähnen an einer zylindrischen oder kegelförmigen Stirnfläche aufweist, wenigstens eine zweite Radscheibe hinzugefügt wird, die an einer Grenzfläche an die erste Randscheibe angrenzt und die an einer kegelstumpfförmigen Stirnfläche Zähne trägt, wobei die Zähne der zwei Radscheiben an der Grenzfläche stetig ineinander übergehen und wenigstens eine der zwei Stirnflächen zu der Grenzfläche hin konvergiert. Mit anderen Worten kann man sich das erfindungsgemäße Stirnrad aus zwei Radscheiben aufgebaut denken, von denen wenigstens eine kegelstumpfförmig und die andere zylindrisch oder kegelstumpfförmig ist, wobei wenigstens eine der kegelstumpfförmigen Stirnflächen zu der Grenzfläche hin verjüngt ist. Der stetige Übergang der Zähne der zwei Radscheiben ist vorgesehen, damit beide Radscheiben gemeinsam mit einer gleichen Schnecke kämmen und dabei Last tragen können.

Vorzugsweise sind zwei zweite Radscheiben beiderseits der ersten Radscheibe vorgesehen, so daß die Verzahnung an ingesamt drei Stellen Last tragen kann.

Erfindungemäß ist das Stirnrad einstückig ausgebildet. Ein solches Stirnrad kann preiswert in einem Abformverfahren durch Spritzguß aus einem Hartkunststoff hergestellt sein.

Daher ist Gegenstand der Erfindung auch eine Form für die Herstellung eines Stirnrads der oben beschriebenen Art, die einen Verzahnungseinsatz für die gleichzeitige Ausformung der Zähne aller Radscheiben umfaßt.

Ein solcher Verzahnungseinsatz ist aus mehreren, jeweils zu einer Radscheibe komplementären Förmscheiben zusammengesetzt. solche Form ist besonders einfach dadurch herstellbar, daß für jeden Zahnausschnitt eine der Zahl der Radscheiben entsprechende Zahl von Bearbeitungsschritten mit einem abtragenden Werkzeug ausgeführt wird, wobei zwischen zwei Bearbeitungsschritten der Verzahnungseinsatz relativ zum Werkzeug in der Ebene des Zahnausschnitts verkippt worden ist.

Der Verzahnungseinsatz kann in Umfangsrichtung einteilig ausgebildet sein. Dies erlaubt die Entformung eines fertigen Stirnrades durch eine Schraubbewegung. Eine solche Form ist geeignet zur Herstellung von Zahnrädern mit zwei Radscheiben, von denen eine zylindrisch ist.

Alternativ kann der Verzahnungseinsatz in Umfangsrichtung in mehrere Segmente unterteilt sein, um das Entformen eines fertigen Zahnrades durch Entfernen der Segmente in radialer Richtung zu ermöglichen.

Weitere Merkmale und Vorteile der Erfindung ergeben sich aus der nachfolgenden Beschreibung von Ausführungsbeispielen mit Bezug auf die Figuren.

### Figuren

Es zeigen
Figur 1 stark schematisiert zwei Schneckengetriebe, jeweils mit einem globoidförmigen beziehungsweise einem schrägverzahnten Stirnrad;
Figuren 2 und 3 im axialen Schnitt zwei Varianten des erfindungsgemäßen Stirnrades;
Figur 4 zwei Stadien bei der Herstellung eines Verzahnungseinsatzes;
Figur 5 einen Verzahnungseinsatz gemäß einer ersten Ausgestaltung im Schnitt; und
Figur 6 einen Verzahnungseinsatz gemäß einer zweiten Ausgestaltung in Draufsicht und im Schnitt.

### Beschreibung der Ausführungsbeispiele

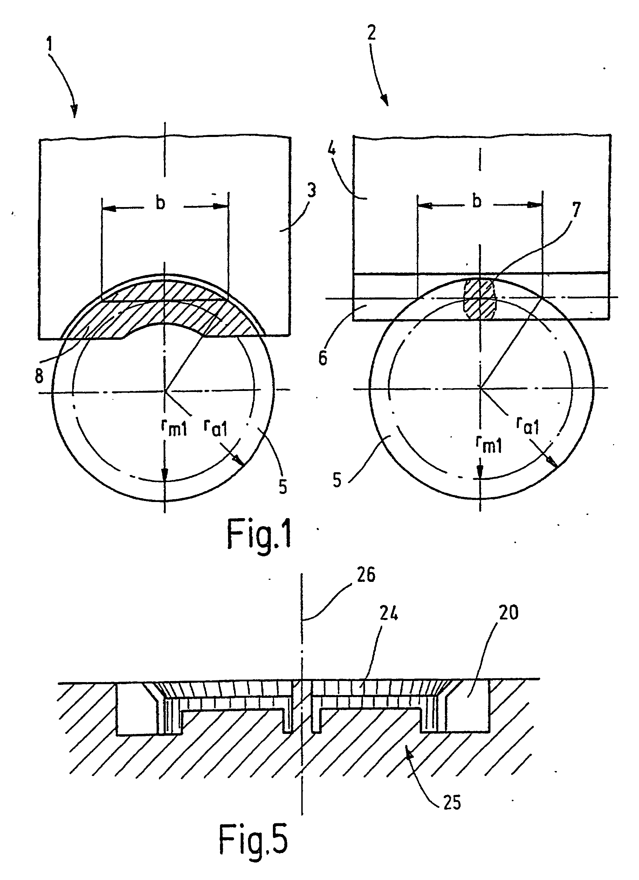

Um die Besonderheit der vorliegenden Erfindung besser zu verdeutlichen, zeigt Figur 1 zunächst zwei herkömmliche Schneckengetriebe, ein Getriebe 1 mit globoidförmigem Stirnrad 3 und ein Getriebe 2 mit einem einfachen, schräg verzahnten Stirnrad 4, jeweils im Eingriff mit einer Schnecke 5. In der idealisierten Darstellung der Figur 1 ist die Schnecke 5 jeweils in Draufsicht entlang ihrer Achse zu sehen, und die Stirnräder 3,4 sind in einem Teilschnitt gezeigt.

Bei dem schrägverzahnten Stirnrad 4 ist der Kontakt zwischen Stirnrad und Schnecke 5 nur auf einem schmalen, in etwa mittig auf dem Zahn 6 liegenden Bereich 7 möglich. Die Fläche, auf der Stirnrad und Schnecke einander zu einem gegebenen Zeitpunkt berühren, wandert im Laufe der Drehung des Getriebes auf dem Zahn 6 innerhalb des Kontaktbereichs 7 auf und ab. Bei einem idealisierten Getriebe mit absolut steifen Rädern wäre diese Fläche punktförmig, in der Praxis hängt ihre Ausdehnung von der Flexibilität des Werkstoffs der Räder und ihrem Abnutzungsgrad ab. Die flächenbezogene Belastung des Kontaktbereichs 7 ist hier relativ groß, und sie kann zu einem schnellen Verschleiß des Stirnrades 4 führen, insbesondere, wenn es aus einem preiswerten, aber mäßig beständigen Material wie etwa einem Kunststoff gefertigt ist.

Bei dem globoidförmigen Stirnrad 3 hingegen ist zu jedem Zeitpunkt ein Kontakt zur Schnecke 5 nicht auf einem Punkt, sondern entlang einer Linie möglich, die im Laufe der Drehung des Getriebes über den gesamten schraffiert dargestellten Kontaktbereich 8 wandert. Der Kontaktbereich ist praktisch identisch mit der Oberfläche eines Zahnes des Stirnrades. Die Last und damit der Verschleiß wird gleichmäßig auf die gesamte Zahnfläche verteilt.

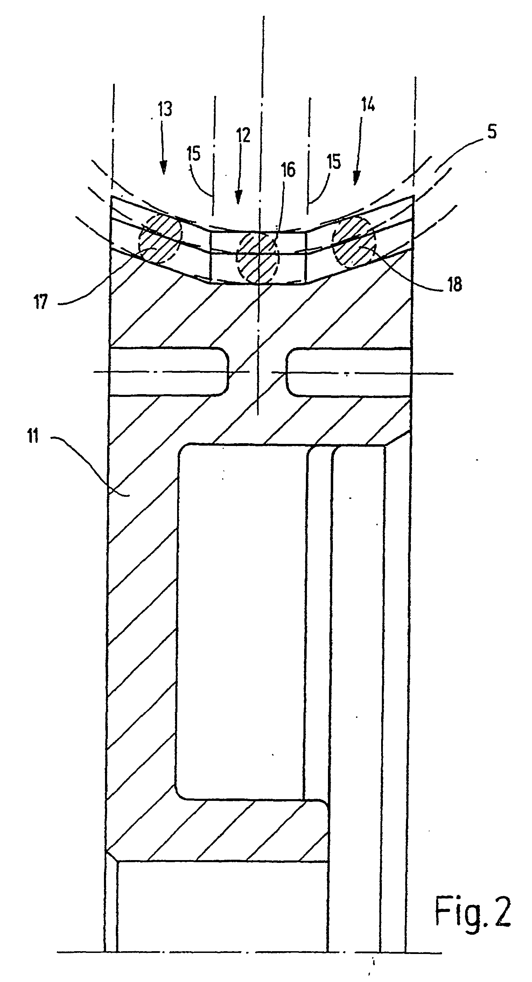

Figur 2 zeigt ein erstes Ausführungsbeispiel eines erfindungsgemäßen Stirnrades 11 in einem axialen Halbschnitt. Die Gestalt der zugehörigen Schnecke 5 ist durch gestrichelte Linien angedeutet. Man kann das Stirnrad 11 als aus drei Radscheiben 12,13,14 aufgebaut auffassen. Die Radscheibe 12 hat eine zylindrische Mantelfläche, die der Radscheiben 13,14 sind kegelstumpfförmig, wobei die kleinere Grundfläche des Kegelstumpfs jeweils eine Grenzfläche zu der Radscheibe 12 bildet. Alle drei Mantelflächen weisen eine schrägverzahnung auf, wobei die Zähne der einzelnen Radscheiben an den Grenzflächen 15 jeweils kontinuierlich ineinander übergehen. Die öffnungswinkel der kegelstumpfförmigen Mantelflächen sind in Abhängigkeit vom Durchmesser der Schnecke 5 so festgelegt, daß die Zähne aller drei Radscheiben die der Schnecke jeweils in Kontaktbereichen 16,17,18 berühren. Die Kontaktfläche ist daher gegenüber der des Schneckengetriebes 2 verdreifacht.

Wenn ein noch größerer Kontaktbereich benötigt wird, kann die Zahl der Radscheiben und damit der Kontaktbereiche auch größer gemacht werden als 3.

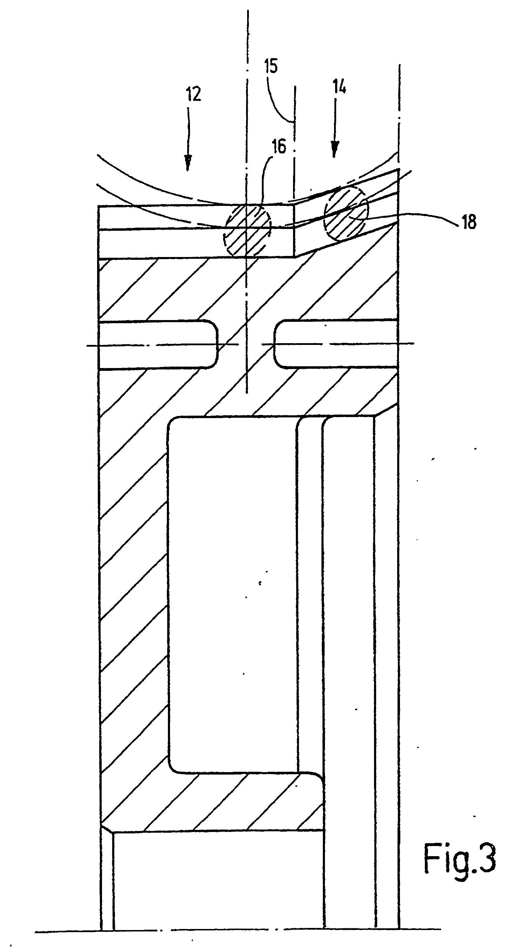

Figur 3 zeigt eine vereinfachte Variante des Stirnrads aus Figur 2. Bei dieser Variante ist die kegelstumpfförmige Radscheibe 13 entfallen, stattdessen ist die zylindrische Radscheibe 12 verbreitert. Diese Variante ist in der Herstellung vorteilhaft, wie später noch deutlich wird.

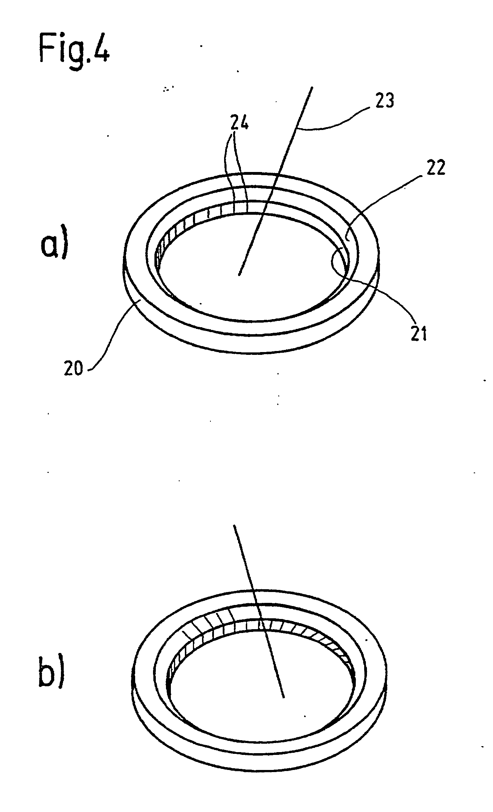

Grundsätzlich können die in Figur 2 und 3 dargestellten Stirnräder wie Globoidräder direkt durch abtragende Bearbeitung eines Rohlings hergestellt werden. Ein besonderer Vorteil gegenüber einem Globoidrad ist jedoch, daß die erfindungsgemäßen Räder sich für die Herstellung durch Abformung eignen und daher wesentlich preiswerter hergestellt werden können. Um die Zähne durch Abformung herzustellen, ist ein Verzahnungseinsatz erforderlich, der einen festen oder lösbaren Bestandteil einer Form, zum Beispiel einer Spritzgußform, bilden kann. Figur 4 zeigt schematisch die Herstellung eines solchen Verzahnungseinsatzes 20. Als Rohling für die Herstellung des Einsatzes 20 wird ein Metallring eingesetzt, dessen innere Umfangsfläche mehrere in axialer Richtung aufeinanderfolgende Abschnitte jeweils entsprechend den Radscheiben des herzustellenden Zahnrades aufweist. Der in Figur 4 dargestellte Ring 20 weist zwei solcher Abschnitte 21,22 auf, die den Kreisscheiben 12 beziehungsweise 14 des Stirnrades aus Figur 3 entsprechen. In dem in Teil a von Figur 4 dargestellten Herstellungsabschnitt werden in Elektroerosionstechnik mit Hilfe eines Drahtes 23 Zahneinschnitte 24 im ersten Abschnitt 21 erzeugt, die jeweils Zähnen der Kreisscheibe 12 des herzustellenden Zahnrads entsprechen. Nachdem auf diese Weise der Abschnitt 21 ringsum mit Zahneinschnitten 24 versehen worden ist, wird der Ring 20 relativ zum Draht 23 verkippt, so daß jeweils in Verlängerung der Zahneinschnitte 24 des Abschnitts 21 entsprechende Zahneinschnitte auch in dem anschließenden Abschnitt 21 gebildet werden können. Dieses Stadium zeigt Teil b von Figur 4. Selbstverständlich kann auch jedesmal, wenn ein Zahneinschnitt 24 am Abschnitt 21 fertiggestellt ist, der Ring 20 gekippt werden, um den entsprechenden Einschnitt im Abschnitt 22 zu erzeugen. Orientierung der Kippachse und Kippwinkel werden dabei in Abhängigkeit von den Abmessungen einer Schnecke so gewählt, daß die später durch die Zahneinschnitte geformten Zähne beider Abschnitte mit der Schnecke kämmen und Last tragen können.

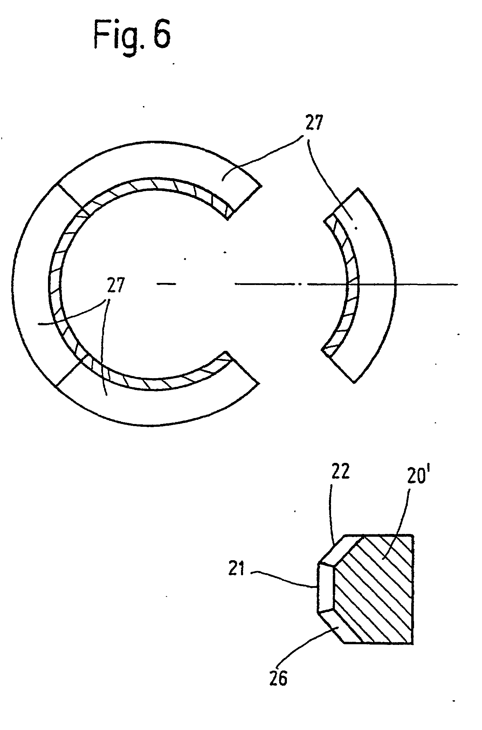

Figur 5 zeigt den fertigen Verzahnungseinsatz 20, montiert in einer Schale 25 einer Spritzgußform. Der Verzahnungseinsatz 20 kann in der Schale 25 fest montiert sein, da es zum Entformen eines darin hergestellten Zahnrades genügt, dieses um die Achse 26 zu drehen, um so zu erreichen, daß sich das Zahnrad aus der Form nach oben löst und freikommt.

Wenn der Verzahnungseinsatz für die Herstellung eines Zahnrads der in Figur 2 gezeigten Form zwei kegelstumpfförmige Abschnitte wie den Abschnitt 22 aus Figur 4 aufweist, ist diese einfache Art der Entformung nicht mehr möglich.

Figur 6 zeigt einen solchen Verzahnungseinsatz 20' in Draufsicht und im Schnitt. Wie anhand der Schnittdarstellung leicht vorzustellen ist, verhindert der zweite kegelstumpfförmige Abschnitt 26 ein Herausschrauben eines fertigen Zahnrades aus dem Einsatz in axialer Richtung. Aus diesem Grund ist der Verzahnungseinsatz 20' in Umfangsrichtung in mehrere Sektoren 27 unterteilt. Die Zahl der Sektoren kann größer sein als die in der Figur dargestellten vier Sektoren, ihre Zahl wird unter Zweckmäßigkeitsgesichtspunkten so festgelegt, daß eine einfache Entformung durch Abrücken der Sektoren 27 in radialer Richtung vom fertigen Zahnrad möglich ist.

## Patentansprüche

1. Stirnrad für ein Schneckengetriebe, mit einer ersten Radscheibe (12), die an einer zylindrischen oder kegelstumpfförmigen Stirnfläche Zähne trägt, und wenigstens einer zweiten Radscheibe, die an einer kegelstumpfförmigen Stirnfläche Zähne trägt, wobei die zwei Radscheiben (13, 14) an einer Grenzfläche (15) aneinandergrenzen, wobei wenigstens eine der zwei Stirnflächen in Richtung der Grenzfläche (15) radial nach innen konvergierend geneigt ist, und daß jeder Zahn der ersten Radscheibe und ein ihm zugeordneter Zahn der zwei Radscheibe an der Grenzfläche (15) stetig ineinander übergehen, **dadurch gekennzeichnet, daß** des Stirnrad als einstückiges Hartkunststoff-Stirnrad ausgebildet ist.

2. Stirnrad nach Anspruch 1, **dadurch gekennzeichnet, daß** die erste Radscheibe (12) zylindrisch ist.

3. Stirnrad nach Anspruch 1, **dadurch gekennzeichnet, daß** es zwei zweite Radscheiben (13,14) beiderseits der ersten Radscheibe (12) aufweist.

4. Stirnrad nach einem der vorhergehenden Ansprüche, **dadurch gekennzeichnet, daß** es in einem Spritzgußverfahren hergestellt ist.

5. Spritzgußform für die Herstellung eines einstückigen Stirnrads, wobei die Spritzgußform einen Verzahnungseinsatz (20) für die gleichzeitige Ausformung aller Zähne umfasst, **dadurch gekennzeichnet, daß** der Verzahnungseinsatz aus mehreren, jeweils zu einer Radscheibe (12, 13, 14) eines Hartkunststoff-Stirnrads nach einem der vorhergehenden Ansprüche komplementären axialen Abschnitten (21,22,26) zusammengesetzt ist, wobei ein Abschnitt zur Formung von Zähnen auf einer zylindrischen oder kegelstumpfförmigen Stirnfläche und wenigstens ein weiterer Abschnitt zur Formung von Zähnen auf einer kegelstumpfförmigen Stirnfläche ausgebildet sind.

6. Form nach Anspruch 5, **dadurch gekennzeichnet, daß** der Verzahnungseinsatz sich einteilig über die gesamte axiale Breite der Zähne aller Radscheiben erstreckt.

7. Spritzgußform nach Anspruch 7, **dadurch gekennzeichnet, daß** jeder Zahnausschnitt (24) des Verzahnungseinsatzes (20,20') hergestellt ist durch eine der Zahl der Radscheiben (12,13,14) entsprechende Zahl von Bearbeitungsschritten mit einem abtragenden Werkzeug (23), wobei zwischen zwei Bearbeitungsschritten der Verzahnungseinsatz (20,20') relativ zum Werkzeug (23) verkippt ist.

8. Spritzgußform nach einem der Ansprüche 5 bis 7, zur Herstellung eines Zahnrades nach Anspruch 2, **dadurch gekennzeichnet, daß** der Verzahnungseinsatz (20) in Umfangsrichtung einteilig für die Entformung des Stirnrades in axialer Richtung ausgebildet ist.

9. Spritzgußform nach einem der Ansprüche 5 bis 7, **dadurch gekennzeichnet, daß** der Verzahnungseinsatz (20') für die Entformung in radialer Richtung in Umfangsrichtung in mehrere Segmente (27) unterteilt ist.

## Claims

1. Spur wheel for a worm gear, with a first wheel disc (12) which carries teeth on a cylindrical or frustoconical end face, and with at least one second wheel disc which carries teeth on a frustoconical end face, the two wheel discs (13, 14) being contiguous to one another at an interface (15), at least one of the two end faces being inclined so as to converge radially inwards in the direction of the interface (15), and each tooth of the first wheel disc and a tooth, assigned to it, of the second wheel disc merging continuously one into the other at the interface (15), **characterized in that** the spur wheel is designed as a one-piece hard-plastic spur wheel.

2. Spur wheel according to Claim 1, **characterized in that** the first wheel disc (12) is cylindrical.

3. Spur wheel according to Claim 1, **characterized in that** it has two second wheel discs (13, 14) on both sides of the first wheel disc (12).

4. Spur wheel according to one of the preceding claims, **characterized in that** it is produced by an injection-moulding method.

5. Injection mould for producing a one-piece spur wheel, the injection mould comprising a toothing insert (20) for the simultaneous moulding of all the teeth, **characterized in that** the toothing insert is composed of a plurality of axial portions (21, 22, 26) complementary in each case to a wheel disc (12, 13, 14) of a hard-plastic spur wheel according to one of the preceding claims, one portion being designed for the moulding of teeth on a cylindrical or frustoconical end face, and at least one further portion being designed for the moulding of teeth on a frustoconical end face.

6. Mould according to Claim 5, **characterized in that** the toothing insert extends as one part over the entire axial width of the teeth of all the wheel discs.

7. Injection mould according to Claim 6, **characterized in that** each tooth cutout (24) of the toothing insert (20, 20') is produced by means of a number of machining steps by means of a removing tool (23) which corresponds to the number of wheel discs (12, 13, 14), the toothing insert (20, 20') being tilted in relation to the tool (23) between two machining steps.

8. Injection mould according to one of Claims 5 to 7 for producing a gearwheel according to Claim 2, **characterized in that** the toothing insert (20) is produced as one part in the circumferential direction for the removal of the spur wheel from the mould in the axial direction.

9. Injection mould according to one of Claims 5 to 7, **characterized in that** the toothing insert (20') is subdivided in the circumferential direction into a plurality of segments (27) for removal from the mould in the radial direction.

## Revendications

1. Pignon droit pour un engrenage à vis sans fin comportant un premier disque de roue (12) dont la surface frontale cylindrique ou de forme tronconique porte des dents ainsi qu'au moins un second disque de roue dont la surface frontale de forme tronconique porte des dents, les deux disques de roue (13, 14) étant adjacents à une surface limite (15),
au moins l'une des deux surfaces frontales est inclinée de manière convergente vers l'intérieur, radialement, en direction de la surface limite (15) et
chaque dent du premier disque de roue et une dent qui lui est associée appartenant au second disque de roue se rejoignent de manière continue au niveau de la surface limite (15),
**caractérisé en ce que**
le pignon droit est réalisé en une seule pièce en matière plastique dure.

2. Pignon droit selon la revendication 1,
**caractérisé en ce que**
le premier disque de roue (12) est cylindrique.

3. Pignon droit selon la revendication 1,
**caractérisé en ce qu'**
il comporte deux seconds disques de roue (13, 14) de part et d'autre du premier disque de roue (12).

4. Pignon droit selon l'une des revendications précédentes,
**caractérisé en ce qu'**
il est réalisé par injection.

5. Moule d'injection pour la fabrication d'un pignon droit en une seule pièce, ce moule d'injection ayant un insert denté (20) pour démouler simultanément toutes les dents,
**caractérisé en ce que**
l'insert denté se compose de plusieurs segments (21, 22, 26) axiaux complémentaires à un disque de roue (12, 13, 14) d'un pignon droit en matière plastique dure selon l'une des revendications précédentes,
un segment servant à mouler les dents sur la surface frontale cylindrique ou tronconique et au moins un autre segment servant à mouler les dents sur l'une des surfaces frontales tronconiques.

6. Moule d'injection selon la revendication 5,
**caractérisé en ce que**
l'insert denté s'étend en une seule pièce sur toute la largeur axiale des dents de tous les disques dentés.

7. Moule d'injection selon la revendication 6,
**caractérisé en ce que**
chaque segment de dent (24) de l'insert denté (20, 20') est réalisé par un nombre d'étapes d'usinage correspondant au nombre de disques de roue (12, 13, 14) par un outil à enlèvement de matière (23) et entre deux étapes d'usinage, l'insert de dent (20, 20') est basculé par rapport à l'outil (23).

8. Moule d'injection selon l'une des revendications 5 à 7 pour la fabrication d'un pignon denté selon la revendication 2,
**caractérisé en ce que**
l'insert denté (20) est réalisé dans la direction périphérique en une seule partie pour le démoulage du pignon droit dans la direction axiale.

9. Moule d'injection selon l'une des revendications 5 à 7,
**caractérisé en ce que**
l'insert denté (20') est subdivisé dans la direction périphérique en plusieurs segments (27) pour le démoulage dans la direction radiale.
